# EUROPEAN PATENT APPLICATION

(11) **EP 2 037 590 A1**
(43) Date of publication of application: **18.03.2009**
(21) Application number: 07715147.0
(22) Date of filing: 02.03.2007
(51) Int. Cl.: H04B 1/40, H04B 7/04, H04B 7/26, H04J 15/00

(54) **TRANSMITTER-RECEIVER AND OPERATION CONTROL METHOD THEREOF**

(30) Priority: 29.03.2006 JP 2006089796
(71) Applicant: NEC Corporation, Minato-ku Tokyo 108-8001 (JP)
(72) Inventor: MARUYAMA, Hidenori, Minato-ku, Tokyo 108-8001 (JP)
(74) Representative: Vossius & Partner
(86) International application number: PCT/JP2007/054053
(87) International publication number: WO 2007/122871

(57) **Abstract**

A transmitter-receiver of this embodiment includes a plurality of antennas (15-a - 15-d) for receiving signals in which a plurality of data are spatially multiplexed, a plurality of RF receivers (16-a - 16-d) and a plurality of demodulators (18-a - 18-d) respectively corresponding to the plurality of antennas, and a network interface (111) and power supply/clock controller (110) for activating only an RF receiver and demodulator corresponding to one of the plurality of antennas in a reception standby period. In the reception standby period, other RF receivers and demodulators are stopped. This makes it possible to largely reduce the power consumption in a communication system having a long reception standby period.

## Description

### Technical Field

The present invention relates to a transmitter-receiver and an operation control method of the same and, more particularly, to the improvement in a power consumption reducing method of a transmitter-receiver using, e.g., the MIMO (Multi Input Multi Output) system.

### Background Art

The techniques of the MIMO system are being extensively studied as a method of further increasing the capacities of third-generation mobile communication systems and wireless LAN systems. The MIMO system is a system using array antennas on both the transmitting and receiving sides. In the multiplex propagation environment, a plurality of antennas transmit different signals by using the difference in transmission status between each antenna and a terminal, thereby increasing the transmission capacity by multiplexing. That is, the MIMO system is a technique of simultaneously transmitting different information data from a plurality of antennas by using the same frequency, and transmitting signals in which the data are spatially multiplexed in a wireless propagation channel. The MIMO system thus increases the transmission capacity by preparing a plurality of transmitting/receiving antennas.

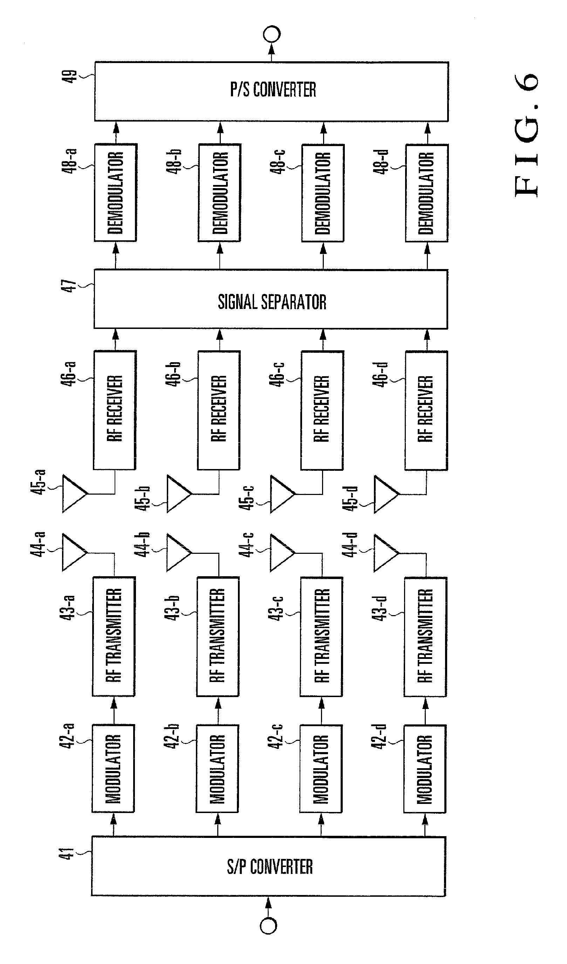

A conventional MIMO wireless data transmitter-receiver will be explained below with reference to Fig. 6. Fig. 6 shows the arrangement of the conventional wireless data transmitter-receiver including four transmitting antennas and four receiving antennas (4 × 4).

The transmitter side comprises an S/P converter 41, modulators 42-a, 42-b, 42-c, and 42-d, RF transmitters 43-a, 43-b, 43-c, and 43-d, and transmitting antennas 44-a, 44-b, 44-c, and 44-d. The S/P converter 41 performs serial/parallel (S/P) conversion on information data in accordance with the number of antennas for transmission. The modulators 42-a, 42-b, 42-c, and 42-d modulate the individual sequence signals having undergone the S/P conversion. The RF transmitters 43-a, 43-b, 43-c, and 43-d perform RF transmission in one-to-one correspondence with the modulators 42-a, 42-b, 42-c, and 42-d. The transmitting antennas 44-a, 44-b, 44-c, and 44-d are respectively connected to the RF transmitters 43-a, 43-b, 43-c, and 43-d.

The receiver side comprises receiving antennas 45-a, 45-b, 45-c, and 45-d, RF receivers 46-a, 46-b, 46-c, and 46-d, a signal separator 47, demodulators 48-a, 48-b, 48-c, and 48-d, and a P/S converter 49. The receiving antennas 45-a, 45-b, 45-c, and 45-d receive electronic waves. The RF receivers 46-a, 46-b, 46-c, and 46-d respectively convert RF signals contained in the electronic waves captured by the receiving antennas 45-a, 45-b, 45-c, and 45-d into baseband signals. The signal separator 47 separates the baseband signals output from the RF receivers 46-a, 46-b, 46-c, and 46-d into signals transmitted from transmitting antennas. The demodulators 48-a, 48-b, 48-c, and 48-d demodulate the transmission signals from the transmitting antennas. The P/S converter 49 performs parallel/serial (P/S) conversion on the signals demodulated by the demodulators 48-a, 48-b, 48-c, and 48-d, thereby obtaining serial information data.

In one transmitter-receiver having the above arrangement, the S/P converter 41 performs serial/parallel conversion on serial information data to be transmitted, thereby obtaining four parallel signals. The modulators 42-a, 42-b, 42-c, and 42-d perform digital modulation such as QPSK modulation and encoding on the obtained transmission signals. The RF transmitters 43-a, 43-b, 43-c, and 43-d amplify the digitally modulated, encoded transmission signals to RF signals, and the transmitting antennas 44-a, 44-b, 44-c, and 44-d transmit the RF signals as electronic waves. The transmitted electronic waves are spatially multiplexed.

The receiving antennas 45-a, 45-b, 45-c, and 45-d of another transmitter-receiver receive the multiplexed electronic waves. The RF receivers 46-a, 46-b, 46-c, and 46-d down-convert the received RF signals into the baseband signals, and input the baseband signals to the signal separator 47. The signal separator 47 separates the input signals into four received signals by using a technique such as maximum likelihood detection, and inputs the signals to the demodulators 48-a, 48-b, 48-c, and 48-d. The demodulators 48-a, 48-b, 48-c, and 48-d perform digital demodulation, decoding, and the like on the received signals, and input the signals to the P/S converter 49. The original information data can be obtained by performing parallel/serial conversion by the P/S converter 49. As described above, it is normally possible to increase the transmission capacity by transmitting and receiving signals by a maximum number of antennas (in this case, four antennas).

Another feature of the MIMO system is the ability to perform communication by changing the numbers of transmitting antennas and receiving antennas in accordance with the propagation environment. That is, communication can be performed by setting the number of transmitting antennas ≤ the number of receiving antennas as the relationship between the number of transmitting antennas and the number of receiving antennas. Examples are 1 x 1, 2 x 2, and 2 x 4. In this case, the communication quality is given priority over the increase in transmission capacity.

The techniques of the MIMO system as described above are disclosed in WO2005-093982 (reference 1).

### Disclosure of Invention

### Problem to be Solved by the Invention

The problem of the MIMO transmitter-receiver is the power consumption larger than that of a normal wireless data transmitter-receiver. The first reason is that the circuit scale increases because modulators, demodulators, RF units, and the like must be independently prepared in proportion to the number of antennas. When particularly no power control is performed, therefore, all or most of these circuits are always in operation, and this increases the power consumption.

The second reason is that as the function unique to the MIMO transmitter-receiver when compared to a normal wireless data transmitter-receiver, a signal separating circuit for separating data transmitted from antennas must be prepared on the receiver side. This circuit requires a large amount of digital circuits such as multipliers, and increases the power consumption.

The technique of reference 1 described above has disclosed a method that stops power supply to transmitters and receivers not used during communication in order to reduce the power consumption. However, reference 1 does not take account of the reduction of the power consumption if a reception standby time that is neither a transmitting mode nor a receiving mode is long. Accordingly, the problem of the increase in power consumption still remains unsolved.

It is an object of the present invention to largely reduce the power consumption in a reception standby period in a wireless communication apparatus adopting the MIMO system.

It is another object of the present invention to reduce the power consumption not only in a reception standby period but also during communication in a wireless communication apparatus adopting the MIMO system.

### Means for Solving the Problem

A transmitter-receiver according to the present invention is characterized by comprising a plurality of antennas which transmit different data and receive signals in which a plurality of data are spatially multiplexed, a plurality of transmission processors and a plurality of reception processors respectively corresponding to the plurality of antennas, and a controller which activates only a reception processor corresponding to one of the plurality of antennas in a reception standby period.

An operation control method of a transmitter-receiver according to the present invention is characterized by comprising the steps of transmitting different data from a plurality of antennas, receiving, by the plurality of antennas, signals in which a plurality of data are spatially multiplexed, and activating only a reception processor corresponding to one of the plurality of antennas in a reception standby period.

### Effects of the Invention

In the present invention, only one reception processor is operated (activated) to detect the carrier (carrier wave) of a received signal in a reception standby period, thereby judging the trigger of the start of reception. This makes it possible to significantly reduce the power consumption in a system having a long reception standby time.

Also, in the present invention, only minimum necessary circuits are operated (activated) in accordance with the number of antennas or channels actually used in transmission or reception. This makes it possible to largely reduce the power consumption not only in the reception standby period but also during communication.

### Brief Description of Drawings

Fig. 1 is a block diagram showing the arrangement of a wireless data transmitter-receiver according to the first exemplary embodiment of the present invention;
Fig. 2A is a block diagram for explaining a transmission processor forming the wireless data transmitter-receiver shown in Fig. 1;
Fig. 2B is a block diagram for explaining a reception processor forming the wireless data transmitter-receiver shown in Fig. 1;
Fig. 3 is a view showing an example of a communication frame format used in a general wireless data transmitter-receiver;
Fig. 4 is a view showing examples of communication frame formats of four antennas in an MIMO transmitter-receiver having these antennas;
Fig. 5 is a block diagram showing the functions of a power supply/clock controller and network interface; and
Fig. 6 is a block diagram showing the arrangement of an example of the conventional MIMO transmitter-receivers.

### Best Mode for Carrying Out the Invention

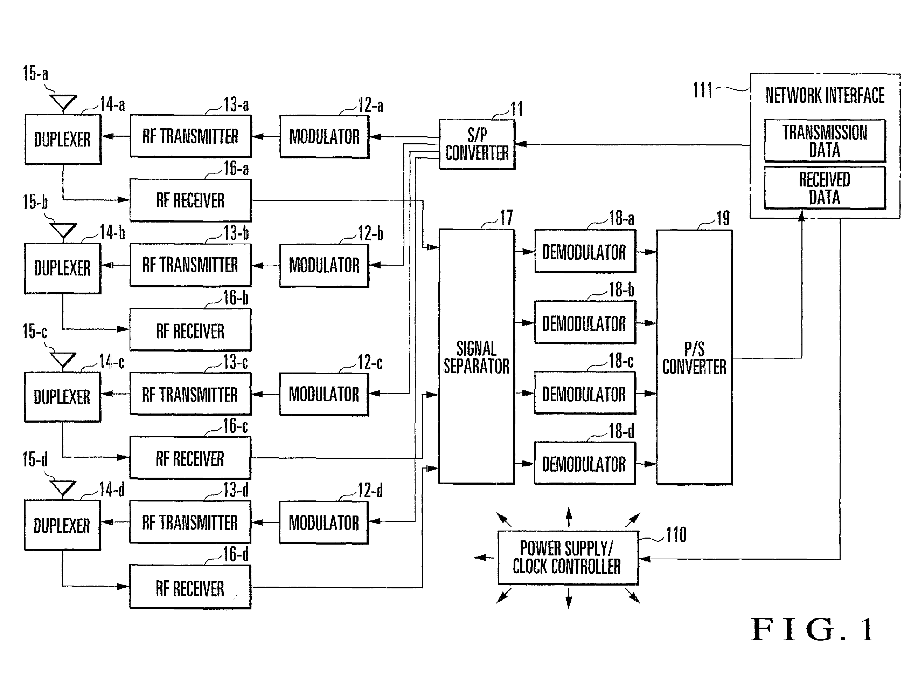

Exemplary embodiments of the present invention will be explained below with reference to the accompanying drawings. First, a wireless data transmitter-receiver according to the first exemplary embodiment of the present invention will be explained with reference to Fig. 1.

The wireless data transmitter-receiver shown in Fig. 1 comprises an S/P converter 11, modulators 12-a, 12-b, 12-c, and 12-d, RF transmitters 13-a, 13-b, 13-c, and 13-d, duplexers 14-a, 14-b, 14-c, and 14-d, transmitting/receiving antennas 15-a, 15-b, 15-c, and 15-d, RF receivers 16-a, 16-b, 16-c, and 16-d, a signal separator 17, demodulators 18-a, 18-b, 18-c, and 18-d, and a P/S converter 19.

The S/P converter 11 performs S/P conversion on information data in accordance with the number of the transmitting/receiving antennas 15-a, 15-b, 15-c, and 15-d. The modulators 12-a, 12-b, 12-c, and 12-d modulate the sequence signals having undergone the S/P conversion. RF transmitters 13-a, 13-b, 13-c, and 13-d perform RF transmission in one-to-one correspondence with the modulators 12-a, 12-b, 12-c, and 12-d. The duplexers 14-a, 14-b, 14-c, and 14-d separate received signals and transmission signals. The transmitting/receiving antennas 15-a, 15-b, 15-c, and 15-d transmit different transmission data as electronic waves, and receive electronic waves in which a plurality of transmission data transmitted from the transmitting/receiving antennas of another transmitter-receiver are spatially multiplexed. The RF receivers 16-a, 16-b, 16-c, and 16-d convert RF signals contained in the electronic waves captured by the transmitting/receiving antennas 15-a, 15-b, 15-c, and 15-d into baseband signals. The signal separator 17 separates the baseband signals output from the RF receivers 16-a, 16-b, 16-c, and 16-d into the signals transmitted from the transmitting/receiving antennas of the other transmitter-receiver. The demodulators 18-a, 18-b, 18-c, and 18-d demodulate the transmission signals from the transmitting/receiving antennas. The P/S converter 19 performs P/S conversion on the signals demodulated by the demodulators 18-a, 18-b, 18-c, and 18-d, thereby obtaining serial information data.

Also, the wireless data transmitter-receiver has a power supply/clock controller 110 for controlling the power supply and operating clock of each part of the wireless data transmitter-receiver on the basis of information of antennas used and information of channels obtained from an upper layer (layer 2 or higher) of the OSI (Open System Interconnection) hierarchical model of the apparatus. In addition, the wireless data transmitter-receiver has a network interface 111 that determines channels and antennas to be used on the basis of the transmission of transmission data, the reception of received data, and CQI (Channel Quality Indicator) information as the reception quality on the receiving side, and notifies the power supply/clock controller 110 of the determined channels and antennas.

This wireless data transmitter-receiver has an antenna configuration using the duplexers 14-a, 14-b, 14-c, and 14-d by assuming FDMA (Frequency Division Multiple Access). However, the wireless data transmitter-receiver may also have an antenna configuration that performs communication by switching transmission and reception by TDMA (Time Division Multiple Access).

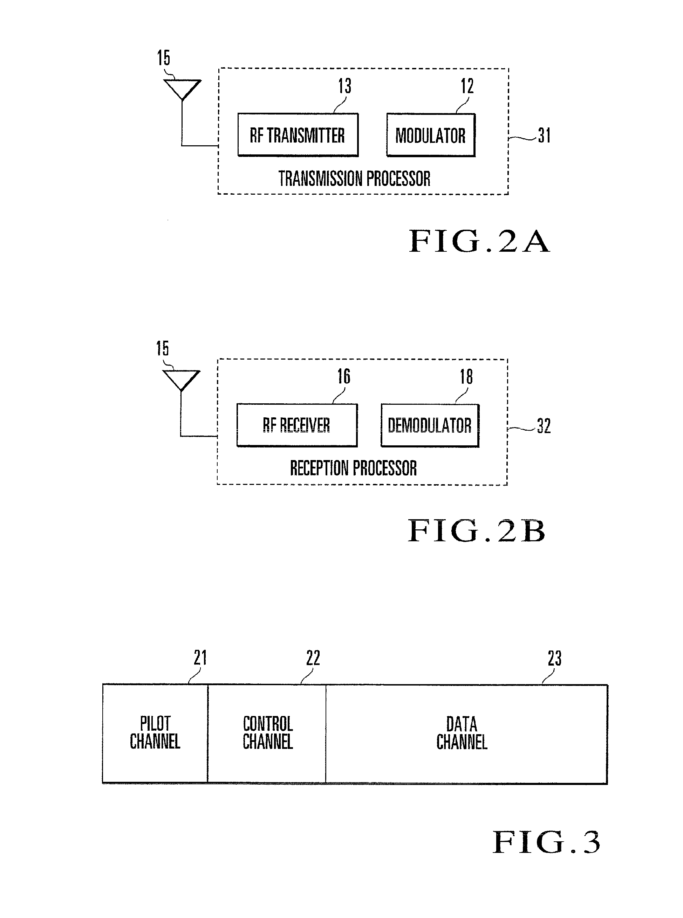

The operation of the wireless data transmitter-receiver shown in Fig. 1 will be explained below. In the following explanation, as shown in Fig. 2A, an arrangement including a modulator 12 and RF transmitter 13 corresponding to the same transmitting/receiving antenna 15 will be called a transmission processor 31. For example, the modulator 12a and RF transmitter 13a corresponding to the transmitting/receiving antenna 15a form a transmission processor 31a. Similarly, as shown in Fig. 2B, an arrangement including an RF receiver 16 and demodulator 18 corresponding to the same transmitting/receiving antenna 15 will be called a reception processor 32. For example, the RF receiver 16a and demodulator 18a corresponding to the transmitting/receiving antenna 15a form a reception processor 32a.

In the wireless data transmitter-receiver shown in Fig. 1, in a reception standby period that is neither a transmission mode nor a reception mode, only a reception detecting function of judging the trigger of the start of reception by performing carrier detection, i.e., only a portion required for reception detection of the reception processor 32 corresponding to one of the transmitting/receiving antennas 15-a, 15-b, 15-c, and 15-d is operated (activated), and the operation of the rest of the circuits of the reception processor 32 is stopped (inactivated). The network interface 111. controls the power supply/clock controller 110 to perform power control (i.e., turn off the power supply or stop the supply of clocks).

After a received signal is detected, the network interface 111 judges the communication environment such as the mobile fading environment and QoS (Quality of Service) on the basis of the CQI information, and determines the numbers of transmitting antennas and receiving antennas. A practical example of the CQI information is the reception SIR (Signal to Interference Ratio). By setting an arbitrary threshold value as a determination criterion by using this value, the network interface 111 determines the transmission processors 31 and reception processors 32 to be operated in accordance with the determined numbers of transmitting antennas and receiving antennas, and gives an instruction to the power supply/clock controller 110. Upon receiving the instruction, the power supply/clock controller 110 activates the corresponding transmission processors 31 and reception processors 32 in accordance with the instruction, and starts transmission/reception. Note that if the antennas to be used are changed, the power supply/clock controller 110 performs control in accordance with the change even during communication.

For example, when operating two transmitting antennas (15-a and 15-b) and three receiving antennas (15-a, 15-b, and 15-c), the power supply/clock controller 110 performs control so as to activate the power supply clocks of the RF transmitters 13-a and 13-b, modulators 12-a and 12-b, and S/P converter 11 on the transmitting side, and activate the power supply clocks of the RF receivers 16-a, 16-b, and 16-c, those circuit portions of the signal separator 17 which are required for separation of the three receiving antennas, the demodulators 18-a, 18-b, and 18-c, and the P/S converter 19 on the receiving side.

In this state, the network interface 111 compares the CQI information such as the reception SIR value with a predetermined threshold value. If the reception SIR value is larger, the communication quality is high, so control of increasing the numbers of transmitting antennas and receiving antennas is performed in order to increase the communication data amount. Simultaneously, control of increasing the numbers of the transmission processors 31 and reception processors 32 to be activated is performed.

On the other hand, if the reception SIR value is smaller than the predetermined threshold value, control of reducing the numbers of transmitting antennas and receiving antennas is performed. At the same time, control of reducing the numbers of the transmission processors 31 and reception processors 32 to be activated is performed, thereby inactivating the transmission processors 31 and reception processors 32.

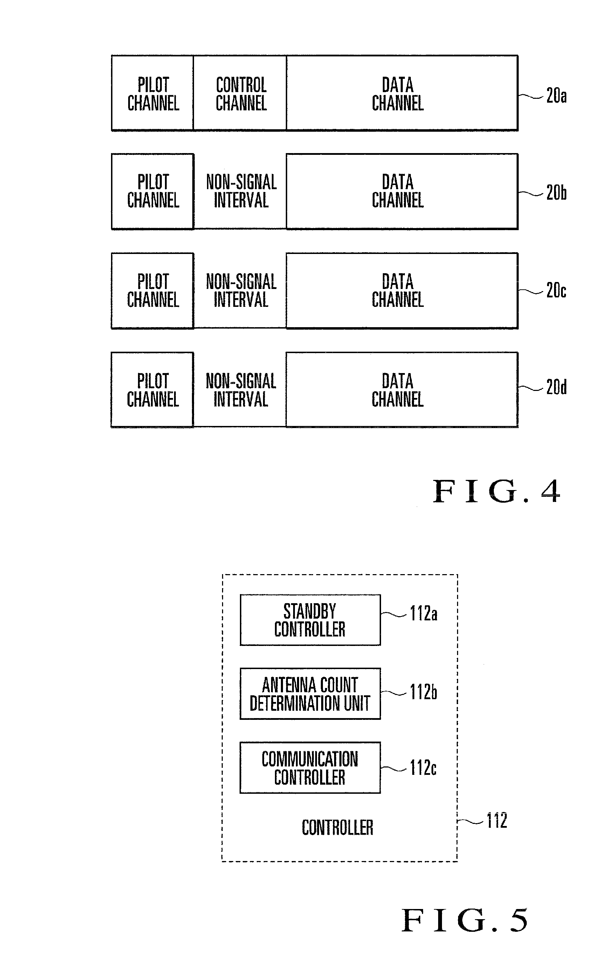

A wireless data transmitter-receiver according to the second exemplary embodiment of the present invention will be explained below with reference to Figs. 3 and 4. As shown in Fig. 3, a communication frame format used in a general wireless data transmitter-receiver includes a pilot channel 21, control channel 22, and data channel 23. A MIMO transmitter-receiver normally transmits and receives the pilot channel 21, control channel 22, and data channel 23 by the communication frame format shown in Fig. 3 in one-to-one correspondence with antennas. Owing to a factor such as the communication environment, however, the control channel is sometimes transmitted from only one of a plurality of antennas on the basis of the judgment by an upper layer. Fig. 4 shows communication frame formats 20a, 20b, 20c, and 20d of four antennas in a MIMO transmitter-receiver having these antennas.

When a network interface 111 instructs a power supply/clock controller 110 to transmit the control channel from one antenna, the power supply/clock controller 110 stops the supply of power or clocks to transmission processors 31 corresponding to antennas for transmitting no control channel, for only the interval of the corresponding control channel. This similarly applies to the receiving side. That is, when the network interface 111 instructs the power supply/clock controlled 110 to receive the control channel by only one antenna, the power supply/clock controller 110 outputs an instruction similar to that on the transmitting side, thereby stopping the supply of power or clocks to reception processors 32 corresponding to antennas for receiving no control channel, for only the interval of the corresponding control channel. Accordingly, the power consumption can be reduced.

The above-mentioned functions of the power supply/clock controller 110 and network interface 111 can be explained as follows with reference to Fig. 5. A controller 112 shown in Fig. 5 is a combination of the power supply/clock controller 110 and network interface 111, and comprises a standby controller 112a, antenna count determination unit 112b, and communication controller 112c. The standby controller 112a has a function of activating only the reception processor 32 corresponding to one of a plurality of transmitting/receiving antennas 15-a, 15-b, 15-c, and 15-d in a reception standby period. The antenna count determination unit 112b has a function of determining the number of antennas to be used in transmission and reception in accordance with the communication quality. The communication controller 112c has a function of activating only the transmission processors 31 and reception processors 32 corresponding to the number of antennas determined by the antenna count determination unit 112b, and a function of stopping the operations of the activated transmission processors 31 and reception processors 32 except for one transmission processor 31 and one reception processor 32 in the interval of the control channel.

## Claims

1. A transmitter-receiver **characterized by** comprising:
a plurality of antennas which transmit different data and receive signals in which a plurality of data are spatially multiplexed;
a plurality of transmission processors and a plurality of reception processors respectively corresponding to the plurality of antennas; and
a controller which activates only a reception processor corresponding to one of the plurality of antennas in a reception standby period.

2. A transmitter-receiver according to claim 1, **characterized in that** said controller includes a communication controller which activates only transmission processors and reception processors corresponding to the number of antennas to be used in transmission and reception, after reception start is detected by said reception processor activated in the reception standby period.

3. A transmitter-receiver according to claim 2, **characterized in that**
said controller further includes an antenna count determination unit which determines the number of antennas to be used in transmission and reception in accordance with communication quality, and said communication controller activates only transmission processors and reception processors corresponding to the number of antennas determined by said antenna count determination unit.

4. A transmitter-receiver according to claim 2, **characterized in that** said communication controller stops operations of said activated transmission processors and said activated reception processors, in an interval of a channel not to be transmitted or received.

5. A transmitter-receiver according to claim 2, **characterized in that** said communication controller stops operations of said activated transmission processors and said activated reception processors except for one transmission processor and one reception processor, in an interval of a control channel.

6. An operation control method of a transmitter-receiver, **characterized by** comprising the steps of:
transmitting different data from a plurality of antennas;
receiving, by the plurality of antennas, signals in which a plurality of data are spatially multiplexed; and
activating only a reception processor corresponding to one of the plurality of antennas in a reception standby period.

7. An operation control method of a transmitter-receiver according to claim 6, **characterized by** further comprising the step of activating only transmission processors and reception processors corresponding to the number of antennas to be used in transmission and reception, after reception start is detected by the reception processor activated in the reception standby period.

8. An operation control method of a transmitter-receiver according to claim 7, **characterized by** further comprising the step of determining the number of antennas to be used in transmission and reception in accordance with communication quality,
wherein the step of activating transmission processors and reception processors comprises the step of activating only transmission processors and reception processors corresponding to the determined number of antennas.

9. An operation control method of a transmitter-receiver according to claim 7, **characterized in that** the step of activating transmission processors and reception processors comprises the step of stopping operations of the activated transmission processors and the activated reception processors, in an interval of a channel not to be transmitted or received.

10. An operation control method of a transmitter-receiver according to claim 7, **characterized in that** the step of activating transmission processors and reception processors comprises the step of stopping the operations of the activated transmission processors and the activated reception processors except for one transmission processor and one reception processor, in an interval of a control channel.

## Amended claims

### Amended claims under Art. 19.1 PCT

1. (deleted)

2. (deleted)

3. (deleted)

4. (amended) A transmitter-receiver **characterized by** comprising:
a plurality of antennas which transmit different data and receive signals in which a plurality of data are spatially multiplexed;
a plurality of transmission processors and a plurality of reception processors respectively corresponding to the plurality of antennas; and
a controller which activates only a reception processor corresponding to one of the plurality of antennas in a reception standby period,
wherein said controller includes a communication controller which activates only transmission processors and reception processors corresponding to the number of antennas to be used in transmission and reception, after reception start is detected by said reception processor activated in the reception standby period, and
said communication controller stops operations of said activated transmission processors and said activated reception processors, in an interval of a channel not to be transmitted or received.

5. (amended) A transmitter-receiver according to claim 4, **characterized in that** said communication controller stops operations of said activated transmission processors and said activated reception processors except for one transmission processor and one reception processor, in an interval of a control channel.

6. (deleted)

7. (deleted)

8. (deleted)

9. (amended) An operation control method of a transmitter-receiver, **characterized by** comprising the steps of:
transmitting different data from a plurality of antennas;
receiving, by the plurality of antennas, signals in which a plurality of data are spatially multiplexed;
activating only a reception processor corresponding to one of the plurality of antennas in a reception standby period; and
activating only transmission processors and reception processors corresponding to the number of antennas to be used in transmission and reception, after reception start is detected by the reception processor activated in the reception standby period,
wherein the step of activating transmission processors and reception processors comprises the step of stopping operations of the activated transmission processors and the activated reception processors, in an interval of a channel not to be transmitted or received.

10. (amended) An operation control method of a transmitter-receiver according to claim 9, **characterized in that** the step of activating transmission processors and reception processors comprises the step of stopping the operations of the activated transmission processors and the activated reception processors except for one transmission processor and one reception processor, in an interval of a control channel.
